# DEMANDE DE BREVET EUROPEEN

(11) **EP 4 160 880 A1**
(43) Date de publication de la demande: **05.04.2023**
(21) Numéro de dépôt: 22195530.5
(22) Date de dépôt: 14.09.2022
(51) Int. Cl.: H02K 3/52

(54) **MOTEUR ÉLECTRIQUE, STATOR POUR MOTEUR ÉLECTRIQUE ET PROCÉDÉ DE FABRICATION ASSOCIÉ**

(30) Priorité: 29.09.2021 FR 2110268
(71) Demandeur: Valeo Systèmes d'Essuyage, 78322 Le Mesnil Saint Denis (FR)
(72) Inventeur: HERRADA, Jose Luis, 78322 La Verriere (FR); BELHAJ, Mehdi, 78322 La Verriere (FR)
(74) Mandataire: Valeo Visibility

(57) **Abrégé**

La présente invention concerne un stator (3) pour moteur électrique (1) comprenant :
- un corps de stator (31) comprenant une pluralité de dents (35) s'étendant entre une partie externe (31a) et une partie interne (31b) du corps de stator (31),
- une pluralité de bobines (33) configurées pour être enroulées respectivement autour de la pluralité de dents (35) entre la partie externe (31a) et la partie interne (31b) du corps de stator (31), caractérisé en ce que le stator (3) comprend également :
- au moins un premier cadre de connexion (7) disposé sur la partie interne (31b) du corps de stator (31) et configuré pour assurer des connexions électriques entre les bobines (33).

## Description

La présente invention concerne le domaine des moteurs électriques et notamment les moteurs électriques destinés à équiper des vélos électriques.

Les vélos électriques sont de plus en plus populaires du fait de la facilité de déplacement qu'ils procurent tout en ayant une consommation énergétique, un impact environnemental et un coût de revient réduits.

Cependant, l'utilisation d'un moteur électrique dans un vélo électrique implique différentes contraintes. Il convient en particulier de fournir un couple important et une vitesse de rotation réduite de manière à permettre une assistance efficace tout en étant compatible avec la cadence de pédalage du cycliste.

Par ailleurs, le positionnement du moteur électrique sur le vélo, généralement au niveau du boîtier de pédalier du vélo implique des contraintes d'encombrement de manière à permettre l'intégration du moteur électrique sans compromettre d'autres caractéristiques du vélo. De plus, il convient de limiter le bruit produit par le moteur électrique.

Afin de répondre au moins partiellement à ces contraintes, la présente invention vise donc à fournir un moteur électrique ayant un encombrement réduit et pouvant produire un couple relativement important.

L'invention a donc pour objet un stator pour moteur électrique comprenant :
- un corps de stator comprenant une pluralité de dents s'étendant entre une partie externe et une partie interne du corps de stator,
- une pluralité de bobines configurées pour être enroulées respectivement autour de la pluralité de dents entre la partie externe et la partie interne du corps de stator, dans lequel le stator comprend également :
- au moins un premier cadre de connexion disposé sur la partie interne du corps de stator et configuré pour assurer des connexions électriques entre les bobines. Les premiers cadres de connexion sont donc situés à l'intérieur d'un cylindre dont la périphérie est définie par les bobines.

Selon un aspect de la présente invention, le stator comprend également :
- au moins un deuxième cadre de connexion disposé sur la partie externe du corps de stator et configuré pour assurer des connexions électriques entre les bobines en complément du, au moins un, premier cadre de connexion. Les deuxièmes cadres de connexion sont donc situés à l'extérieur d'un cylindre dont la périphérie est définie par les bobines.

Selon un autre aspect de la présente invention, les dents du stator sont des dents séparées amovibles.

Selon un autre aspect de la présente invention, les bobines sont connectées selon un montage en étoile.

Selon un autre aspect de la présente invention, les premier(s) et/ou deuxième(s) cadres de connexions sont configurés pour relier les bobines selon un bobinage standard dans lequel les bobines d'une phase sont reliées en parallèle les unes par rapport aux autres selon un pas de bobinage entier.

Selon un autre aspect de la présente invention, les premier(s) et/ou deuxième(s) cadres de connexions sont configurés pour relier certaines bobines en série selon un pas de bobinage fractionnaire.

Selon un autre aspect de la présente invention, le bobinage des bobines est réalisé en commençant l'enroulement par la partie interne du corps de stator. L'enroulement est commencé à l'extrémité du corps de stator destinée à être orientée vers l'intérieur du stator à l'état monté du stator.

Selon un autre aspect de la présente invention, le stator comprend un premier cadre de connexion configuré pour relier les bobines selon un montage en étoile ou en triangle et trois deuxièmes cadres de connexion s'étendant de manière concentrique sur la partie externe du corps de stator pour relier entre elles les bobines d'une phase, les deuxièmes cadres de connexion étant séparés les uns des autres par des parois non conductrices électriquement.

Selon un autre aspect de la présente invention, le stator comprenant un deuxième cadre de connexion configuré pour relier les bobinages selon un montage en étoile ou en triangle et trois premiers cadres de connexion s'étendant de manière concentrique sur la partie interne du corps de stator pour relier entre elles les bobines d'une phase, les premiers cadres de connexion étant séparés les uns des autres par des parois non conductrices électriquement.

Selon un autre aspect de la présente invention, les premiers cadres de connexion sont disposés sur un module configuré pour être positionné sur la partie interne du corps de stator.

Selon un autre aspect de la présente invention, les parois non conductrices électriquement sont réalisées en plastique surmoulé.

Selon un autre aspect de la présente invention, un élément d'isolation électrique est disposé sur le corps de stator du stator et dans lequel ledit élément d'isolation électrique comprend un plot de maintien du fil de bobinage.

Selon un autre aspect de la présente invention, le plot de maintien est un plot provisoire configuré pour être retiré lors du positionnement du, au moins un, premier cadre de connexion.

Selon un autre aspect de la présente invention, l'élément d'isolation électrique est configuré pour recevoir les premier(s) et deuxième(s) cadre(s) de connexion.

La présente invention concerne également un moteur électrique comprenant un stator tel que décrit précédemment dans lequel ledit moteur électrique est un moteur triphasé sans balais.

Selon un autre aspect de la présente invention, le moteur électrique comprend 10 ou 14 pôles.

La présente invention concerne également un procédé de fabrication d'un stator comprenant un corps de stator comprenant une pluralité de dents s'étendant entre une partie externe et une partie interne du corps de stator, le procédé comprenant une étape d'enroulement d'une pluralité de bobines respectivement autour de la pluralité de dents entre la partie externe et la partie interne du corps de stator, dans lequel l'étape d'enroulement est réalisée en commençant du côté de la partie interne du stator, le procédé comprenant également une étape de positionnement d'un premier cadre de connexion sur la partie interne du corps de stator, ledit premier cadre de connexion étant configuré pour assurer des connexions électriques entre les bobines.

D'autres caractéristiques et avantages de l'invention apparaîtront plus clairement à la lecture de la description suivante, donnée à titre d'exemple illustratif et non limitatif, et des dessins annexés parmi lesquels :
Figure 1 représente une vue schématique en perspective d'une partie d'un moteur électrique selon un premier mode de réalisation;
Figure 2 représente une vue schématique en perspective d'un corps de stator comprenant une pluralité de dents autour desquelles sont enroulées des bobines;
Figure 3 représente une vue en perspective d'un corps de stator comprenant une pluralité de dents séparées autour desquelles sont enroulées des bobines;
Figure 4 représente un schéma électrique d'un bobinage standard en étoile pour un moteur électrique triphasé comprenant 15 bobines;
Figure 5 représente un schéma électrique d'un bobinage fractionnaire en étoile pour un moteur électrique triphasé comprenant 18 bobines ;
Figure 6 représente une vue en perspective d'un stator comprenant des cadres de connexion selon un premier mode de réalisation;
Figure 7 représente une vue agrandie d'une partie du stator de la figure 6 ;
Figure 8 représente une vue agrandie d'une partie du stator de la figure 6;
Figure 9 représente une vue schématique en perspective d'une partie d'un moteur électrique selon un deuxième mode de réalisation;
Figure 10 représente une vue agrandie des cadres de connexion et des bobines d'un stator selon le deuxième mode de réalisation ;
Figure 11 représente un organigramme des étapes d'un procédé de fabrication d'un stator selon le premier mode de réalisation ; et
Figure 12 représente un organigramme des étapes d'un procédé de fabrication d'un stator selon le deuxième mode de réalisation ;

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc.

Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

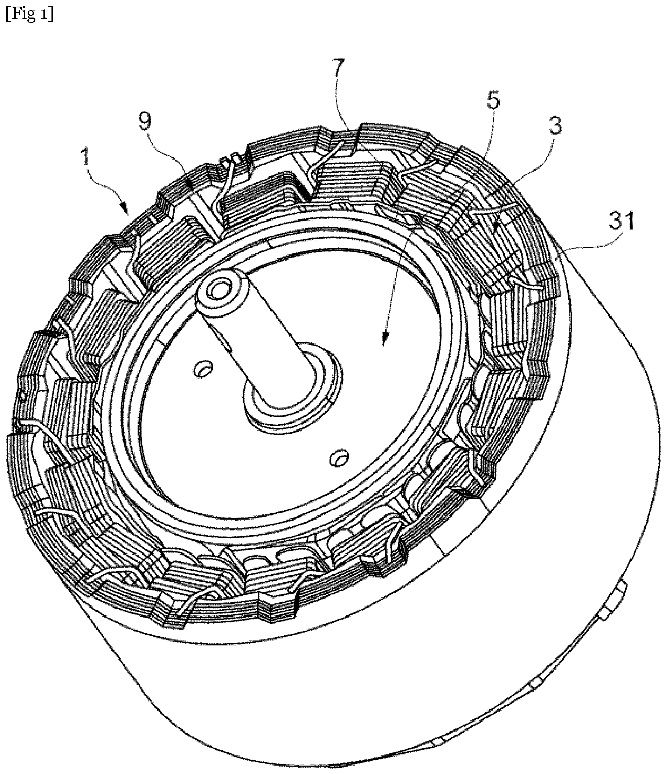

La figure 1 représente un schéma d'une partie d'un moteur électrique 1 comprenant un stator 3 et un rotor 5. Le moteur électrique 1 est par exemple un moteur électrique sans balais mais la présente invention ne se limite pas à ce type de moteur électrique. Un tel moteur électrique 1 est particulièrement adapté pour être disposé dans un vélo électrique mais la présente invention ne se limite pas à cette application.

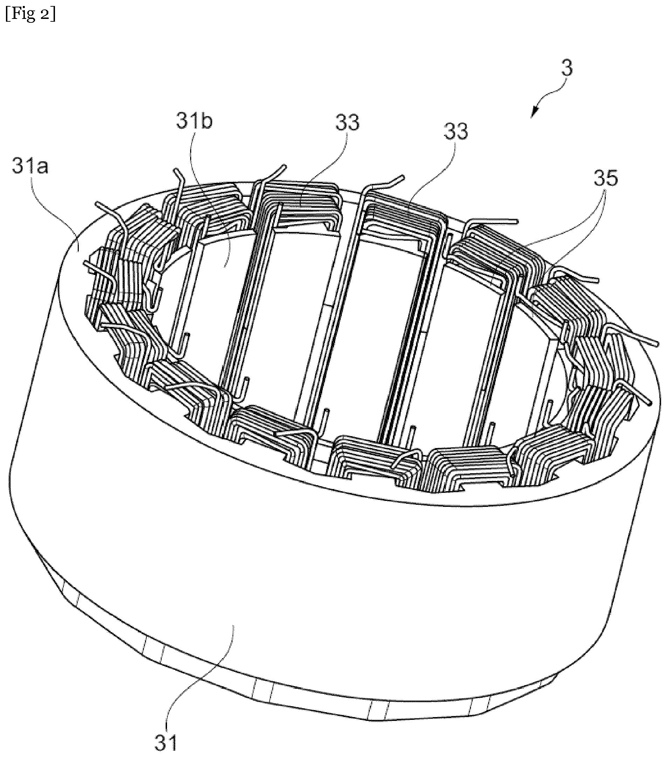

Comme représenté sur la figure 2, le stator 3 comprend un corps de stator 31 configuré pour recevoir une pluralité de bobines 33, quinze dans l'exemple de la figure 2, cependant un nombre différent de bobines 33 peut être utilisé. Le corps de stator 31 comprend une partie cylindrique externe 31a à partir de laquelle s'étendent une pluralité de dents 35, quinze dans le cas de la figure 1. Les dents 35 sont orientées vers le centre du cylindre et présentent une section en forme de T configurée pour retenir les bobinages formant les bobines 33. Ainsi, une bobine 33 est formée sur chaque dent 35 par un enroulement de spires d'un bobinage.

Les dents 35 s'étendent entre une partie externe 31a du stator 3 formée par la partie cylindrique externe 31a et une partie interne 31b du stator 3 formée par l'extrémité interne des dents 35.

L'enroulement formant les bobines 33 comprend généralement une pluralité de spires adjacentes et s'étendant entre la partie interne 31a et la partie externe 31b du stator 3. De plus, plusieurs couches de spires peuvent être superposées autour de la dent 35.

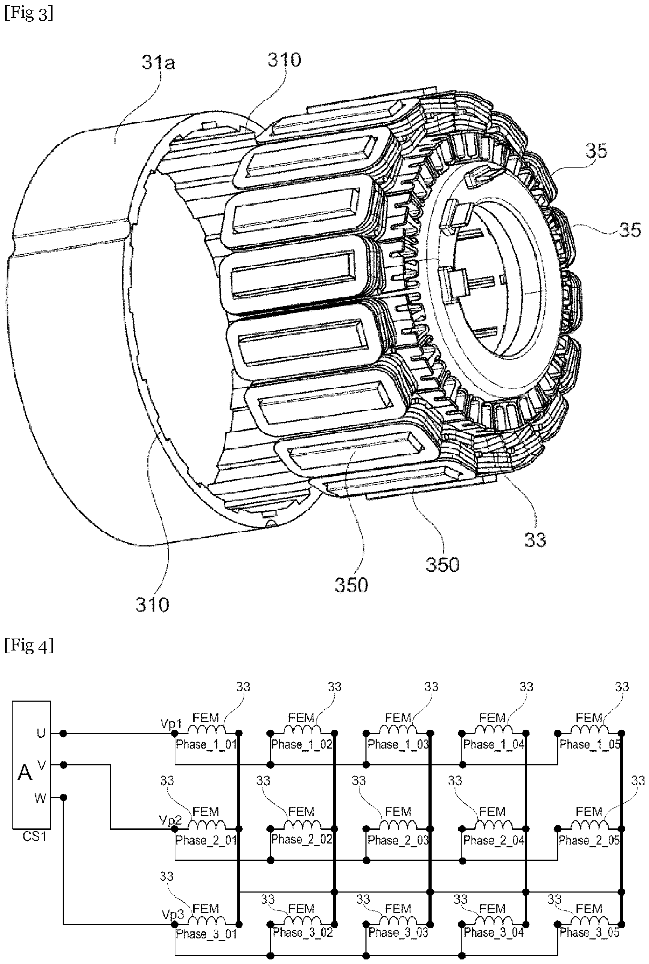

Les dents 35 peuvent venir de matière avec la partie cylindrique externe 31a. Selon un mode de réalisation alternatif, les dents 35 sont des dents séparées qui sont amovibles par rapport à la partie cylindrique externe 31a. La figure 3 représente un exemple de stator 3 à dents séparées dans lequel la partie cylindrique 31a comprend une pluralité d'encoches 310 s'étendant axialement sur le côté interne de la partie cylindrique 31a. Dans le cas de la figure 3, le stator 3 comprend quinze dents 35 mais un stator 3 comprenant un autre nombre de dents séparées peut bien sûr être réalisé également. Les encoches 310 ont par exemple une section en forme de T ou en U. Les dents 35 comprennent alors un embout de fixation 350 présentant une section de forme complémentaire aux encoches 310. L'embout de fixation 350 est destiné à être introduit dans une encoche 310 de la partie cylindrique 31a par translation de l'embout de fixation 350 dans l'encoche 310. La fixation des dents 350 est assurée par la complémentarité des formes de l'embout de fixation 350 et de l'encoche 310. L'utilisation d'un stator 3 à dents séparées permet de réaliser l'enroulement des bobines 33 sur les dents 35 avant le positionnement des dents 35 sur la partie cylindrique 31a ce qui permet de réduire l'espace nécessaire entre les bobines 33, les bobines 33 pouvant être plus proches les unes des autres.

Le stator 3 comprend également une pluralité de cadres de connexion 7, 9 configurés pour assurer les connexions électriques entre les bobines 33. Différentes configurations de connexion électriques peuvent être utilisées pour connecter les bobines 33.

La figure 4 représente une première configuration électrique dans laquelle le stator 3 comprend 15 bobines 33, 3 phases notées u, v, w et dans laquelle les bobines 33 sont connectées en étoile selon un bobinage standard, c'est-à-dire un bobinage dans lequel les différentes bobines d'une phase u, v, w sont disposées en parallèle. Un tel stator 3 peut être utilisé dans un moteur électrique 1 à 10 pôles.

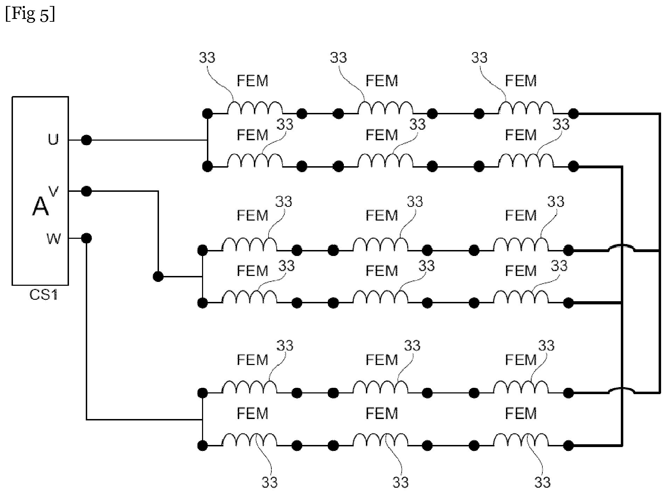

La figure 5 représente une deuxième configuration électrique dans laquelle le stator 3 comprend 18 bobines 33, trois phases notées u, v, w et dans laquelle les bobines 33 sont connectées en étoile selon un bobinage fractionnaire, c'est-à-dire un bobinage dans lequel certaines bobines d'une phase u, v, w sont disposées en série. Dans le cas présent, chaque phase comprend deux branches de trois bobines 33 disposées en série, les deux branches étant disposées en parallèle. Le bobinage fractionnaire permet de produire un décalage temporel entre les bobines actives et ainsi d'avoir une transition plus amortie lors du passage des pôles du rotor 5 en regard des dents 35 du stator 3 et permet ainsi de réduire le bruit généré par le moteur électrique 1. Un tel stator 3 peut être utilisé dans un moteur électrique à 10 ou 14 pôles par exemple mais d'autres nombre de pôles peuvent être utilisés.

De telles configurations avec un grand nombre de bobines 33 et de pôles permettent d'obtenir un couple important tout en limitant la taille du moteur électrique 1 du fait du rapprochement des bobines grâce à l'utilisation de dents séparées.

L'invention ne se limite pas aux deux configurations de bobinages présentées sur les figures 4 et 5 de sorte que d'autres configurations ayant un nombre de bobines 33 en série et ou en parallèle différent et couplées en étoile ou en triangle peuvent également être utilisées.

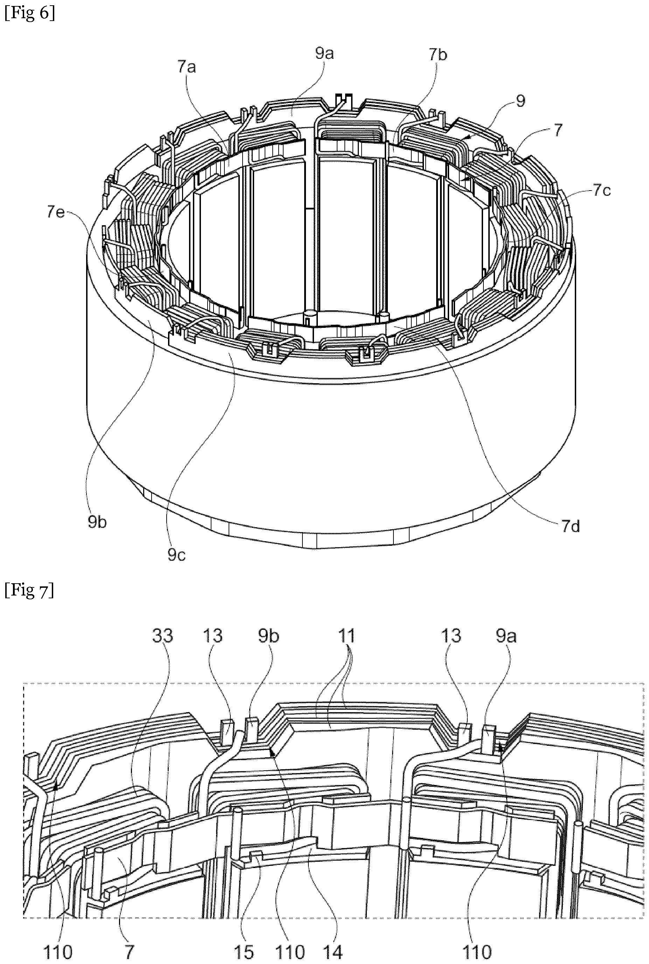

Ainsi, des cadres de connexions 7, 9 connectés à l'extrémité des bobines 33 sont utilisés pour relier les différentes bobines 33 selon le schéma électrique choisi. Ces cadres de connexion 7, 9 sont disposés sur un élément isolant électrique 14 (visible sur la figure 7) disposé sur le corps de stator 31. Le corps de stator 31 est par exemple réalisé en acier et l'élément isolant électrique 14 est par exemple réalisé en matière plastique et peut être surmoulé sur le corps de stator 31.

Les figures 6 à 8 représentent un premier exemple de réalisation selon le schéma électrique de la figure 1 et de la figure 3 dans lequel le stator 3 comprend un premier cadre de connexion 7 disposé sur la partie interne 31b du corps de stator 31 et configuré pour relier une première extrémité des bobines 33 des différentes phases u, v, w entre elles pour former la connexion en étoile. Le premier cadre de connexion 7 comprend cinq portions notées respectivement 7a, 7b, 7c, 7d et 7e reliant chacune trois bobines 33 associées respectivement aux trois phases u, v, w. De préférence, les trois bobines 33 associées respectivement aux trois phases u, v, w peuvent être disposées de manière adjacente sur le corps de stator 31 comme sur la figure 6.

Le stator 3 comprend également des deuxièmes cadres de connexion 9 disposés sur la partie externe 31a du corps de stator 31 et configurés pour relier la deuxième extrémité des bobines 33 selon le schéma électrique de la figure 4 (connexion en parallèle des différentes bobines 33 associées à une phase u, v w). Les deuxièmes cadres de connexion 9 sont également configurés pour permettre les connexions électriques vers l'extérieur du stator 3, notamment pour l'alimentation des différentes phases u, v, w, par exemple via des connecteurs additionnels disposés sur les deuxièmes cadres de connexion 9. Dans l'exemple de la figure 5, le stator 3 comprend trois deuxièmes cadres de connexions 9 notés respectivement 9a, 9b et 9c disposés d'un côté du stator 3 de manière concentrique autour des bobines 33. Comme cela est mieux visible sur la figure 7, les deuxièmes cadres de connexions 9 sont séparés les uns des autres par des parois non conductrices électriquement 11 également disposées de manière concentrique avec les deuxièmes cadres de connexion 9. Ces parois non conductrices électriquement 11 sont par exemple réalisées en matière plastique et peuvent être surmoulées sur le corps de stator 31 et peuvent notamment venir de matière avec l'élément isolant électrique 14. Dans le présent exemple, afin d'éviter tout court-circuit entre les différents deuxièmes cadres de connexions 9, les parois non conductrices 11 ont une hauteur supérieure aux deuxièmes cadres de connexion 9 et comprennent localement des retraits de matière 110 dans leur partie dépassant des deuxièmes cadres de connexion 9 pour permettre les liaisons entre les bobines 33 et les deuxièmes cadres de connexion 9. Les retraits de matière 110 des différentes parois non conductrices électriquement 11 sont disposés en regard les uns des autres et en regard des bobines 33. Le nombre de retraits de matières 110 correspond par exemple au nombre de bobines 33, soit quinze dans l'exemple de la figure 6. De plus, les deuxièmes cadres de connexion 9 comprennent des connecteurs 13 configurés pour faire saillie axialement vers l'extérieur du stator 3 et s'étendre en regard des retraits de matière 110 des parois non conductrices électriquement 11. La deuxième extrémité des bobines 33 est donc configurée pour s'étendre radialement au travers des retraits de matière 110 jusqu'au connecteur de l'un des deuxièmes cadres de connexion 9 disposé en regard de la bobine 33 correspondante.

Les premier 7 et deuxièmes 9 cadres de connexion sont ainsi disposés d'un premier côté radial du corps de stator 31 et de manière adjacente au corps de stator 31. De plus, la hauteur axiale des premier 7 et deuxième 9 cadres de connexion et des parois non conductrices électriquement 11 est limitée au maximum de manière à limiter la dimension axiale du stator 3. Par ailleurs, le positionnement du premier cadre de connexion 7 adjacent à la partie interne 31b du corps de stator 31 et la disposition des deuxièmes cadres de connexion 9 de manière concentrique permettent de limiter le diamètre extérieur du stator 3.

L'encombrement axial et radial du stator 3 est donc réduit par rapport aux moteurs électriques de l'état de la technique ayant une puissance équivalente.

De plus, comme cela sera mieux décrit dans la suite de la description, l'enroulement des bobines 33 sur les dents 35 peut être réalisé en commençant du côté de la partie interne 31b du corps de stator 31 ce qui permet de limiter la distance entre le premier cadre de connexion 7 et la première extrémité de la bobine 33 et également de limiter l'encombrement des bobines 33 et donc du stator 3.

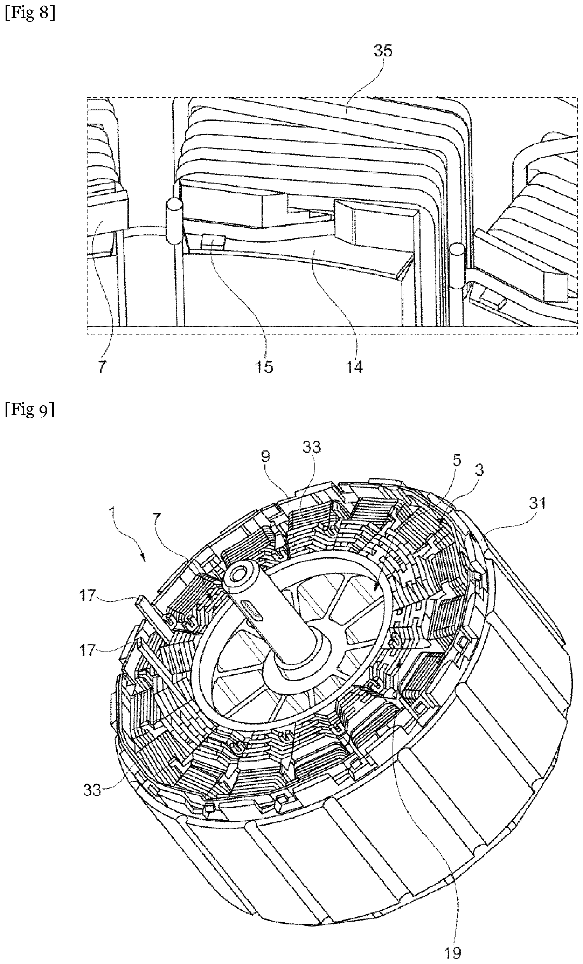

De plus, comme représenté sur les figures 7 et 8, un plot de maintien 15 peut être disposé sur l'extrémité interne des dents 35 (située du côté de la partie interne 31b du corps de stator 31) pour maintenir la première extrémité du fil de la bobine 35, notamment lors de l'enroulement des spires pour former la bobine 35. Ce plot de maintien 15 peut être un plot provisoire configuré pour être retiré lors de la connexion de la première extrémité de la bobine 35 sur le premier cadre de connexion 7. Le plot de maintien 15 est par exemple disposé sur l'élément isolant électrique 14 et peut venir de matière avec ledit élément isolant électrique 14.

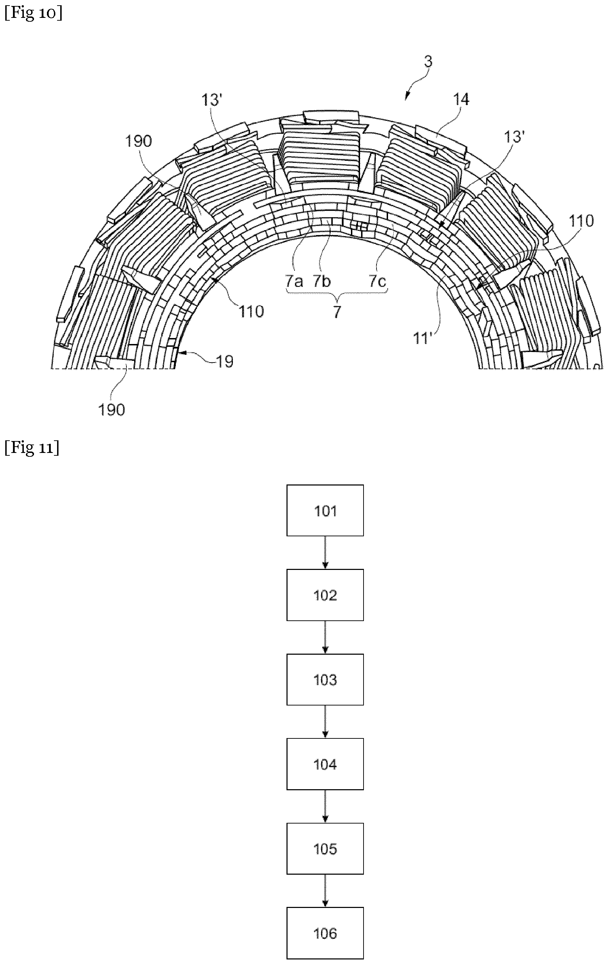

Selon un deuxième exemple de réalisation représenté sur les figures 9 et 10, le stator 3 comprend des premiers cadres de connexions notés respectivement 7a, 7b et 7c disposés sur la partie interne 31b du corps de stator 31 et configurés pour relier une première extrémité des bobines 33 selon le schéma électrique de la figure 4 (connexion en parallèle des différentes bobines 33 associée à une phase u, v, w). Les premiers cadres de connexion 7 sont également configurés pour permettre les connexions électriques vers l'extérieur du stator 3, notamment pour l'alimentation des différentes phases u, v, w, par exemple via des connecteurs additionnels 17. Les premiers cadres de connexions 7 ont par exemple une configuration similaire aux deuxièmes cadres de connexions 9 décrits dans le premier exemple de réalisation, c'est-à-dire disposés de manière concentrique les uns par rapport aux autres et séparés par des parois non conductrices électriquement 11'. Les parois non-conductrices électriquement 11' comprennent également des retraits de matière 110 disposés en regard les uns des autres et les premiers cadres de connexions 7 comprennent des connecteurs 13' s'étendant axialement en regard des retraits de matière 110 pour permettre la connexion avec la première extrémité de la bobine 33 disposée en regard des retraits de matière 110.

De plus, les premiers cadres de connexion 7 et les parois non conductrices électriquement 11' peuvent être disposés sur un module 19 configuré pour venir se fixer sur le corps de stator 31. Le module 19 est par exemple réalisé en plastique et comprend des pattes radiales 190 sur sa périphérie, lesdites pattes radiales 190 étant configurées pour venir se positionner entre les dents 35 du corps de stator 31 pour assurer la fixation du module 19 sur le corps de stator 31. Les parois non conductrices électriquement 11' peuvent venir de matière avec le module 19 et les premiers cadres de connexion 7 sont assemblés sur le module 19. Les premiers cadres de connexions 7 sont par exemple positionnés dans des fentes ménagées entre les parois non conductrices électriquement 11'.

Le stator 3 comprend également un deuxième cadre de connexion 9 (visible sur la figure 9) disposé sur la partie externe 31a du corps de stator 31 et configuré pour relier la deuxième extrémité des bobines 33 des différentes phases u, v, w entre elles pour former la connexion en étoile. Le deuxième cadre de connexion 9 comprend par exemple cinq portions reliant chacune trois bobines 33 associées respectivement aux trois phases u, v, w. Alternativement, ces liaisons peuvent être réalisées via un ou des deuxième(s) cadre(s) de connexion 9 formant un anneau complet sur lequel certaines ou l'ensemble des bobines viennent se connecter suivant le schéma électrique désiré. De préférence, les trois bobines 33 associées respectivement aux trois phases u, v, w peuvent être disposées de manière adjacente sur le corps de stator 31. Le deuxième cadre de connexion 9 est par exemple disposé sur un élément isolant électrique 14 en matière plastique qui peut être surmoulé sur le corps de stator 31.

Les premier(s) 7 et deuxième(s) 9 cadres de connexion sont réalisés en métal, par exemple en aluminium, en laiton, en cuivre ou en fer.

Comme pour le premier mode de réalisation, les dents 35 du corps de stator 31 peuvent être des dents séparées comme présentées sur la figure 3.

Selon un troisième mode de réalisation non représenté, le stator 3 comprend seulement des premiers cadres de connexion 7 disposés sur la partie interne 31b du stator 3 et configurés pour assurer l'ensemble des connexions électriques entre les bobines 33. Les premiers cadres de connexion 7 peuvent être disposés sur un module tel que le module 19 décrit précédemment.

La présente invention concerne également un moteur électrique 1 comprenant un stator 3 tel que décrit selon l'un des modes de réalisation précédents. Le moteur électrique 1 comprend également un rotor 5 (visible sur les figures 1 et 9) configuré pour être positionné à l'intérieur du stator 3, c'est-à-dire au centre du corps de stator 31 et des bobines 33. Le moteur électrique 1 est par exemple un moteur électrique triphasé sans balais et comprend par exemple 10 ou 14 pôles (dans le cas d'un moteur électrique 1 à 15 bobines) mais d'autres types de moteurs électriques 1 ayant notamment un nombre de pôles différent peuvent également être utilisés. Les pôles sont par exemple réalisés par des aimants permanents disposés sur le rotor 5.

La présente invention concerne également un procédé de fabrication d'un stator 3 comprenant un corps de stator 31 comprenant une pluralité de dents 33 s'étendant entre une partie externe 31a et une partie interne 31b du stator 3, par exemple un stator 3 selon le premier exemple de réalisation décrit précédemment.

La figure 11 représente un organigramme des étapes du procédé de fabrication d'un tel stator 3 selon le premier mode de réalisation présenté sur les figures 1 et 6 dans lequel les dents 35 viennent de matière avec le corps de stator 31.

La première étape 101 concerne le positionnement de l'élément isolant électrique 14 sur le corps de stator 31. L'élément isolant électrique 14 est par exemple réalisé en matière plastique et est surmoulé sur le corps de stator 31. De plus l'élément isolant électrique 14 comprend les parois non conductrices électriquement 11.

La deuxième étape 102 concerne le positionnement des premiers 7 et deuxième 9 cadres de connexion sur l'élément isolant électrique 14. Les premiers cadres de connexion 7 étant positionnés sur la partie externe 31a du corps de stator 31 et le deuxième cadre de connexion 9 étant positionné sur la partie interne 31b du corps de stator 31. Les cadres de fixation sont maintenus sur l'élément isolant électrique 14 par complémentarité de forme ou par contraintes, le cadre de connexion pouvant être soumis à une déformation plastique par des plots de maintien disposés sur l'élément isolant électrique 14.

La troisième étape 103 est une étape facultative et concerne le positionnement de la première extrémité de la bobine 33 dans un plot de maintien 15 configuré pour maintenir l'extrémité de la bobine 33 en position pendant l'enroulement de la bobine. Le plot de maintien 15 peut être formé sur l'élément isolant électrique 14.

La quatrième étape 104 concerne l'enroulement des bobines 33 sur les dents 35 du corps de stator 31. Dans ce mode de réalisation, les dents 35 sont réalisées de matière avec le corps de stator 31 et le bobinage est réalisé en commençant du côté interne 31b du corps de stator 31 comme représenté sur les figures 7 et 8. L'enroulement comprend une pluralité de spires s'étendant depuis la partie interne 31b jusqu'à la partie externe 31a du corps de stator 31. Différentes couches de spires peuvent être formées, par exemple trois couches de spires en enroulant une nouvelle couche de spires par-dessus la couche précédente. Les spires sont retenues par le rebord formé par l'extrémité des dents 35 dont la section présente une forme en T. Dans le cas de trois couches de spires, le bobinage se termine du côté externe 31a du corps de stator 31.

Selon des modes de réalisation alternatifs, le bobinage peut être réalisé en commençant du côté externe. De plus, le bobinage peut comprendre un nombre de couches de spires différent de trois. De manière préférentielle, le bobinage est réalisé de manière à utiliser au maximum la place disponible autour des dents 35 tout en permettant de réaliser les bobinages des bobines 33 adjacentes. Le bobinage est par exemple réalisé par un robot configuré pour venir enrouler les spires autour des dents 35. Les bobinages autour des différentes dents 35 sont par exemple réalisés les uns à la suite des autres, les bobinages étant tous identiques.

La cinquième étape 105 concerne les connexions entre les extrémités des bobines 33 et le premier cadre de connexion 7 d'une part et entre les extrémités des bobines 33 et les deuxièmes cadres de connexion 9 d'autre part. La connexion est par exemple réalisée par soudure ou via des connecteurs disposés sur les cadres de connexion 7, 9 et configurés pour maintenir le fil de bobinage et pour assurer la connexion électrique entre le fil de bobinage et les cadres de connexion 7, 9 ou par tout autre moyen connu de l'homme du métier.

La sixième étape 106 est une étape facultative et concerne le retrait du plot de maintien 15 utilisé lors de l'étape 103 lorsque ce plot de maintien 15 est un plot provisoire et amovible.

L'ordre des étapes peut être différent de l'ordre présenté, l'étape 106 peut par exemple être réalisée avant l'étape 105.

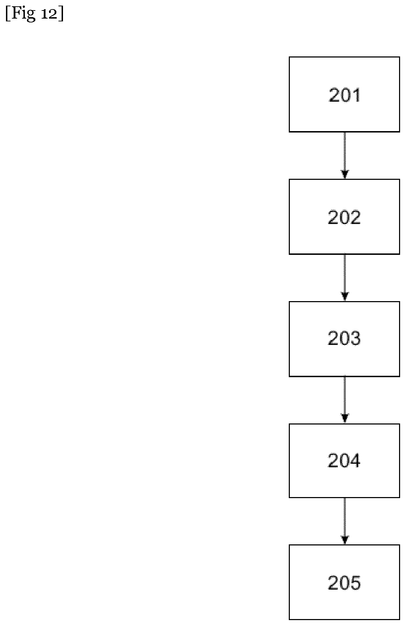

La figure 12 représente un organigramme des étapes du procédé de fabrication d'un stator tel que décrit précédemment selon le deuxième mode de réalisation présenté sur les figures 9 et 10.

La première étape 201 concerne le positionnement de l'élément isolant électrique 14 sur le corps de stator 31. L'élément isolant électrique 14 est par exemple réalisé en matière plastique et est surmoulé sur le corps de stator 31. Dans le cas présent, l'élément isolant électrique 14 s'étend sur la partie externe 31a du corps de stator 31.

La deuxième étape 202 concerne l'enroulement des bobines sur les dents du corps de stator 31. Dans ce mode de réalisation, le bobinage est réalisé en commençant du côté interne du stator. L'enroulement comprend une pluralité de spires s'étendant entre les deux extrémités de la dent. Différentes couches de spires peuvent être formées, par exemple trois couches de spires en enroulant une nouvelle couche de spires par-dessus la couche précédente. Les spires sont retenues par le rebord formé par l'extrémité des dents 35 dont la section présente une forme en T. Dans le cas de trois couches de spires, le bobinage se termine du côté interne 31b du corps de stator 31. Alternativement, le bobinage peut se terminer à d'autres emplacements.

De plus, le bobinage peut comprendre un nombre de couches de spires différent de trois. De manière préférentielle, le bobinage est réalisé de manière à utiliser au maximum la place disponible autour des dents 35. Le bobinage est par exemple réalisé par un robot configuré pour venir enrouler les spires autour des dents. Les bobinages sont tous identiques. Des plots de maintien, amovibles ou non, peuvent être ménagés sur l'élément isolant électrique 14 pour maintenir l'extrémité du fil de bobinage.

La troisième étape 203 concerne le positionnement du deuxième cadre de connexion 9 sur l'élément isolant électrique 14 au niveau de la partie externe 31a du corps de stator 31.

La quatrième étape 204 concerne le positionnement du module 19 comprenant les premiers cadres de connexion sur le corps de stator 31. Le positionnement est réalisé en insérant les pattes radiales 190 du module 19 entre les bobines 33.

La cinquième étape 205 concerne les connexions entre les extrémités des bobines 33 et les cadres de connexion 7, 9. La connexion est par exemple réalisée par soudure ou via des connecteurs disposés sur les cadres de connexion 7, 9 et configurés pour maintenir le fil de bobinage et pour assurer la connexion électrique entre les cadres de connexion 7, 9 et le fil de bobinage ou par tout autre moyen connu de l'homme du métier.

L'ordre des étapes peut être différent que l'ordre présenté.

Pour les deux modes de réalisation le stator 3 peut comprendre des dents séparées comme présenté sur la figure 3. Dans ce cas, l'enroulement de bobines 33 sur les dents 35 est réalisé en premier puis les dents 35 sont disposées sur le corps de stator 31. Les autres étapes peuvent être similaires aux étapes présentées précédemment. Ainsi, La disposition des cadres de connexion à la fois sur la côté interne 31a et le côté externe 31b du corps de stator 31 et donc du stator 3 permet d'obtenir un moteur électrique 1 compact axialement et radialement ce qui permet de l'intégrer facilement notamment dans des vélos électriques. De plus, la fabrication de tels moteur électriques reste simple et permet donc une fabrication à grande échelle.

## Revendications

1. Stator (3) pour moteur électrique (1) comprenant :
- un corps de stator (31) comprenant une pluralité de dents (35) s'étendant entre une partie externe (31a) et une partie interne (31b) du corps de stator (31),
- une pluralité de bobines (33) configurées pour être enroulées respectivement autour de la pluralité de dents (35) entre la partie externe (31a) et la partie interne (31b) du corps de stator (31),
**caractérisé en ce que** le stator (3) comprend également :
- au moins un premier cadre de connexion (7) disposé sur la partie interne (31b) du corps de stator (31) et configuré pour assurer des connexions électriques entre les bobines (33).

2. Stator selon la revendication 1 dans lequel le stator (3) comprend également :
- au moins un deuxième cadre de connexion (9) disposé sur la partie externe (31a) du corps de stator (31) et configuré pour assurer des connexions électriques entre les bobines (33) en complément du, au moins un, premier cadre de connexion (7).

3. Stator (3) selon la revendication 1 ou 2 dans lequel les dents (35) du stator (3) sont des dents séparées amovibles.

4. Stator (3) selon l'une des revendications précédentes dans lequel les premier(s) (7) et/ou deuxième(s) (9) cadres de connexions sont configurés pour relier les bobines (33) selon un bobinage standard dans lequel les bobines (33) d'une phase (u, v, w) sont reliées en parallèle les unes par rapport aux autres selon un pas de bobinage entier.

5. Stator (3) selon l'une des revendications précédentes dans lequel les premier(s) (7) et/ou deuxième(s) (9) cadres de connexions sont configurés pour relier certaines bobines (33) en série selon un pas de bobinage fractionnaire.

6. Stator (3) selon l'une des revendications précédentes dans lequel le bobinage des bobines (33) est réalisé en commençant l'enroulement par la partie interne (31b) du corps de stator (31).

7. Stator (3) selon l'une des revendications précédentes comprenant un premier cadre de connexion (7) configuré pour relier les bobines (33) selon un montage en étoile ou en triangle et trois deuxièmes cadres de connexion (9) s'étendant de manière concentrique sur la partie externe (31a) du corps de stator (31) pour relier entre elles les bobines (33) d'une phase (u, v, w), les deuxièmes cadres de connexion (9) étant séparés les uns des autres par des parois non conductrices électriquement (11).

8. Stator (3) selon l'une des revendications 1 à 6 comprenant un deuxième cadre de connexion (9) configuré pour relier les bobinages selon un montage en étoile ou en triangle et trois premiers cadres de connexion (7) s'étendant de manière concentrique sur la partie interne (31b) du corps de stator (31) pour relier entre elles les bobines (33) d'une phase (u, v, w), les premiers cadres de connexion (7) étant séparés les uns des autres par des parois non conductrices électriquement (11').

9. Stator (3) selon la revendication précédente dans lequel les premiers cadres de connexion (7) sont disposés sur un module (19) configuré pour être positionné sur la partie interne (31b) du corps de stator (31).

10. Stator (3) selon l'une des revendications précédentes dans lequel un élément d'isolation électrique (14) est disposé sur le corps de stator (31) du stator (3) et dans lequel ledit élément d'isolation électrique (14) comprend un plot de maintien (15) du fil de bobinage.

11. Stator (3) selon la revendication précédente dans lequel le plot de maintien (15) est un plot provisoire configuré pour être retiré lors du positionnement du, au moins un, premier cadre de connexion (7).

12. Stator (3) selon la revendication 10 ou 11 dans lequel l'élément d'isolation électrique (14) est configuré pour recevoir les premier(s) (7) et deuxième(s) (9) cadre(s) de connexion.

13. Moteur électrique (1) comprenant un stator (3) selon l'une des revendications précédentes dans lequel ledit moteur électrique (1) est un moteur triphasé sans balais.

14. Procédé de fabrication d'un stator (3) comprenant un corps de stator (31) comprenant une pluralité de dents (33) s'étendant entre une partie externe (31a) et une partie interne (31b) du corps de stator (31), le procédé comprenant une étape (104) d'enroulement d'une pluralité de bobines (33) respectivement autour de la pluralité de dents (35) entre la partie externe (31a) et la partie interne (31b) du corps de stator (31), **caractérisé en ce que** l'étape (104) d'enroulement est réalisée en commençant du côté de la partie interne (31b) du stator (3) et **en ce que** le procédé comprend également une étape (102) de positionnement d'un premier cadre de connexion (7) sur la partie interne (31b) du corps de stator (31), ledit premier cadre de connexion (7) étant configuré pour assurer des connexions électriques entre les bobines (33).
